# EUROPÄISCHE PATENTSCHRIFT

(11) **EP 1 955 515 B1**
(45) Veröffentlichungstag und Bekanntmachung des Hinweises auf die Patenterteilung: **11.05.2011**
(21) Anmeldenummer: 06818828.3
(22) Anmeldetag: 25.11.2006
(51) Int. Cl.: H04W 8/26

(54) **ERZEUGUNG VON IDENTITÄTEN VON KLIENTEN IN EINEM KOMMUNIKATIONSSYSTEM**
GENERATION OF CLIENT IDENTITIES IN A COMMUNICATION SYSTEM
GENERATION D'IDENTITES DE CLIENTS DANS UN SYSTEME DE COMMUNICATION

(30) Priorität: 01.12.2005 DE 102005057732
(43) Veröffentlichungstag der Anmeldung: 13.08.2008
(73) Patentinhaber: Vodafone Holding GmbH, 40213 Düsseldorf (DE)
(72) Erfinder: JUNGBLUT, Stephan, 80337 München (DE)
(74) Vertreter: Weisbrodt, Bernd
(86) Internationale Anmeldenummer: PCT/EP2006/011321
(87) Internationale Veröffentlichungsnummer: WO 2007/062787

(56) Entgegenhaltungen:
- EP-A- 1 365 621
- WO-A-01/31840
- WO-A-03/077572
- GB-A- 2 317 983
- HSIAO-KUANG WU ET AL: "The sharing session key component (SSKC) algorithm for end-to-end secure wireless communication" SECURITY TECHNOLOGY, 2000. PROCEEDINGS. IEEE 34TH ANNUAL 2000 INTERNATIONAL CARNAHAN CONFERENCE ON OCTOBER 23-25, 2000, PISCATAWAY, NJ, USA,IEEE, 23. Oktober 2000 (2000-10-23), Seiten 242-250, XP010527870 ISBN: 0-7803-5965-8

## Beschreibung

Die vorliegende Erfindung betrifft ein Verfahren zur Erzeugung einer Identität von Klienten in einem ein Rechnernetz und ein zellulares Moblifunknetz aufweisenden Kommunikationssystem, mit den Merkmalen des Oberbegriffs des Anspruchs 1. Ein solches Verfahren wird beispielsweise seitens der WO 2001/31840 A1 offenbart.

Ferner betrifft die vorliegende Erfindung die Nutzung einer erfindungsgemäßen Identität zur Authentisierung und/oder Authentifizierung eines Klienten. Gegenstand der Erfindung ist ferner eine Autorisierung eines Zugriffs eines Datenendgerätes auf Daten und/oder Dienste einer Datenendelnrichtung in einem Rechnernetz. Ferner betrifft die Erfindung ein aus einem Rechnernetz mit Datenendeinrichtungen und einem zellularen Mobllfunknetz mit darin betreibbaren mobilen Endgeräten bestehendes Kommunikationssystem, wobei die Datenendelnrichtungen, die Einrichtungen des Mobilfunknetzes und/die mobilen Endgeräte zur Ausführung und/oder Nutzung eines erfindungsgemäßen Verfahrens ausgebildet sind.

Identitäten von Klienten, insbesondere Prozessen und/oder Benutzern von Endeinrlchtungen, werden in Kommunlkationsnetzwerken in zahlreichen Anwendungen zur Authentisierung, Authentifizierung und insbesondere Autorisierung verwendet. Authentisieren im Sinne der vorliegenden Erfindung ist das Nachweisen einer identität eines Klienten. Authentifizierung beziehungswelse Authentifikation im Sinne der vorliegenden Erfindung ist ein Vorgang, bei welchem die Identität eines Klienten anhand eines bestimmten Merkmals überprüft wird. Dementsprechend sind bei einer Identitätsüberprüfung ein sich authentisierender Teilnehmer und ein diesen authentifizierender Teilnehmer beteiligt. Im Anschluss an eine erfolgreiche Identitätsüberprüfung kann dann eine Autorisierung eines Zugriffs des sich authentisierenden Teilnehmers auf Daten und/oder Dienste des Kommunikationssystems erfolgen.

Im Stand der Technik sind zahlreiche Verfahren und Systeme bekannt, die insbesondere zur Authentisierung, Authentifizierung und/oder Autorisierung von Klienten zum Einsatz kommen, wobei die jeweiligen Identitäten auf unterschiedlichste Art und Weise erzeugt beziehungsweise generiert werden.

Die Authentisierung und/oder Authentifizierung der Identität von Klienten, kann, je nach Ausgestaltung der Identität, der Authentisierung und/oder Authentifizierung auf fünf unterschiedliche Arten erfolgen. Dabei werden die Identitäten der Klienten hinsichtlich der diese definierenden Eigenschaften im Rahmen von Authentisierung beziehungsweise Authentifizierung überprüft. Unterschieden wird dabei nach Wissen, nach Besitz und/oder biometrischen Merkmalen. Eine Authentifizierung kann dabei auf fünf verschiedene Wege erfolgen, die miteinander kombinierbar sind:
1. Man hat etwas, beispielsweise einen Schlüssel, eine Karte oder dergleichen Kennung.
2. Man weiß etwas, beispielsweise ein Passwort.
3. Man ist etwas oder wer, beispielsweise Überprüfung biologischer Eigenschaften von Personen hinsichtlich Fingerabdrücken, Gesichts- und/oder Stimmencharakteristika.
4. Man ist an einem bestimmen Ort, beispielsweise eine bestimmte Funkzelle in einem zellularen Mobilfunknetz.
5. Man kann etwas, vorzugsweise etwas individuelles; beispielsweise die Unterschriftsleistung einer Person.

Bei Kombination von zwei dieser Möglichkeiten liegt eine sogenannte 2-Faktor-Authentifizierung vor, wie sie beispielsweise im Zusammenhang mit in zellularen Mobilfunknetzen betreibbaren mobilen Endgeräten nutzbaren SIM-Karten und der beziehungsweise den jeweils zugehörigen PIN beziehungsweise PINs gegeben ist.

Derartige Verfahren und Systeme kommen beispielsweise im Bereich von zellularen Mobilfunknetzen umfangreich zum Einsatz, beispielsweise im Zusammenhang mit einem mobilen Endgerät einen Zugriff in beziehungsweise auf das Mobilfunknetz ermöglichenden Mobilfunkteilnehmer- Identifikations- Modulen, sogenannten SIM-Karten (SIM: Subscriber Identifikation Module), welche dazu in der Regel in in Mobilfunknetzen betreibbare mobile Endgeräte eingesetzt werden. Neben einer seitens entsprechender SIM-Karten gegebenen kartenspezifischen und in der Regel eindeutigen Kennung erfordert ein Zugriff auf beziehungsweise in das Mobilfunknetz zusätzlich die Eingabe einer persönlichen Identifikationsnummer beziehungsweise eines numerischen Zugangscodes, einer sogenannten PIN (PIN: Personal Identity Number) seitens eines die SIM-Karte nutzenden mobilen Endgerätes durch den Nutzer des mobilen Endgerätes. Im Zusammenhang mit Rechnernetzten, insbesondere Rechnernetzen, beispielsweise dem Internet oder einem Intranet, sind ebenfalls zahlreiche einen Zugang zu dem Rechnernetz ermöglichende Authentisierungs-, Authentifizierung- und/oder Autorisierungsverfahren und/oder - systeme bekannt, wobei die von Klienten entsprechend genutzten identitäten in unterschiedlichster Form und auf unterschiedlichste Art und Weise erzeugt sind beziehungsweise werden. Ein Zugriff eines menschlichen Nutzers auf Daten und/oder Dienste einer Datenendeinrichtung in einem Rechnernetz erfolgt von einer an das Rechnernetz angeschlossenen Datenendeinrichtung des Nutzers in der Regel unter Verwendung einer Identität, welche in der Regel aus einem Nutzernamen und einem dem Nutzernamen zugeordneten geheimen Passwort besteht. Ein Zugriff auf die Daten und/oder Dienste der diese bereitstellenden Datenendeinrichtung wird von dieser bei durch den Nutzer erfolgender Eingabe von Nutzername und geheimen Passwort ermöglicht. Dazu sind seitens der die Daten und/oder Dienste bereitstellenden Datenendeinrichtung der Nutzername und das dem Nutzername zugeordnete geheime Passwort gespeichert. Bei Zugriffsanforderung des Nutzers werden der von dem Nutzer eingegebene Nutzername und das von dem Nutzer eingegebene geheime Passwort seitens der die Daten und/oder Dienste bereitstellenden Datenendeinrichtung mit dem seitens der die Daten und/oder Dienste bereitstellenden Datenendeinrichtung erfassten Nutzername und Passwort verglichen und bei Übereinstimmung dem Nutzer beziehungsweise der dem Nutzer zugeordneten Datenendeinrichtung ein Zugriff auf die Daten und/oder Dienste ermöglicht.

Auch sind Kommunikationssysteme bekannt, bei denen Endeinrichtungen über ein Rechnernetz und/oder ein zellulares Mobilfunknetz miteinander gruppenweise verbunden sind. Derartige Kommunikationssysteme bilden für einzelne Gruppenmitglieder beziehungsweise deren Endgeräte innerhalb eines Unternehmens oder dergleichen Verbund ein virtuelles privates Netzwerk, ein sogenanntes VPN (VPN: Virtual Private Network). Das VPN basiert dabei in der Regel auf kryptographischen Methoden. Der über ein Rechnernetz, in der Regel das Internet, und/oder das Mobilfunknetz ermöglichte Zugriff einzelner Gruppenmitglieder auf das virtuelle private Netzwerk der Gruppe verwendet dabei ebenfalls Klientenidentitäten und Methoden zur Authentisierung, Authentifizierung und/oder Autorisierung. Die Verwaltung der Gruppe beziehungsweise der einzelnen Gruppenmitglieder erfolgt dabei seitens einer Datenendeinrichtung des Rechnernetzes, in der Regel durch einen sogenannten Access-Server des Unternehmens und/oder einem entsprechenden Access-Server beziehungsweise einer Übergangseinheit (Gateway) seitens des Mobilfunknetzes. Dabei erfolgt die Zuordnung von Gruppenmitgliedern zu der Gruppe und/oder einzelnen Gruppenmitgliedern beziehungsweise Gruppen in Kommunikationssystem für Kommunikationsanwendungen zur Verfügung stehenden Diensten seitens einer entsprechenden Verwaltungseinrichtung seitens des Kommunikationssystems.

Bei über ein Rechnernetz, insbesondere dem Internet, zugänglichen Daten und/oder Diensten einer Datenendeinrichtung sind unberechtigte und/oder missbräuchliche Zugriffe und/oder Nutzungen der Daten und/oder Dienste zu vermeiden. Dies gilt insbesondere bei einem Zugriff eines Mitarbeiters eines Unternehmens auf Daten und/oder Dienste einer Datenendeinrichtung eines Untemehmensnetzwerks, einem sogenannten Intranet, von einer außerhalb des Rechnernetzes des Unternehmens befindlichen Datenendeinrichtung über das Internet, beispielsweise bei einem Zugriff des Mitarbeiters des Unternehmens auf Datenendeinrichtungen im Unternehmen von seinem Wohnort oder dergleichen unternehmensexternen Orten aus. Um unberechtigte beziehungsweise missbräuchliche Zugriffe zu verhindern, sind im Stand der Technik bei der Erzeugung und/oder Nutzung von Identitäten insbesondere im Zusammenhang mit einer Authentisierung, Authentifizierung und/oder Autorisierung verschiedene kryptographische Verfahren und Methoden bekannt, die ein Verschlüsseln beziehungsweise Endschlüsseln von und/oder mit Identitäten umfassen. Dabei kommen insbesondere asymmetrische kryptographische Verfahren und/oder Systeme zum Einsatz, welche zur Erhöhung der Sicherheit von Verschlüsselungen beziehungsweise Entschlüsselungen in der Regel allbekannte und geheime Schlüssel nutzen, wobei die geheimen Schlüssel für den authentisierenden Teilnehmer und den authentifizierenden Teilnehmer einer entsprechenden Identitätsüberprüfung jeweils geheim beziehungsweise privat sind, im Gegensatz zu sogenannten symmetrischen kryptographischen Verfahren und/oder Systemen. Das sogenannte RSA-Verfahren (RSA: Rivest-Shamir-Adelman) stellt ein entsprechendes asymmetrisches kryptographisches Verfahren beziehungsweise System bereit, welches im Stand der Technik für verschiedenste Anwendungen im Internet Verwendung findet.

Nachteilig bei dem bisher im Stand der Technik bekannten Identitäten und/oder deren Nutzungen im Rahmen von Authentisierung, Authentifizierung und/oder Autorisierung sind in Abhängigkeit von der jeweiligen Ausgestaltung hinsichtlich Einrichtung, Wartung und/oder Handhabung aufwändig und kostenintensiv. Darüber hinaus sind die bisher bekannten Identitäten und deren Nutzungen im Rahmen von Authentisierung, Authentifizierung beziehungsweise Authentifikation und/oder Autorisierung hinsichtlich der Sicherheit von unberechtigten beziehungsweise missbräuchlIchen Nutzungen verbesserungsbedürftig, insbesondere im Zusammenhang mit der Autorisierung eines Zugriffs auf Daten und/oder Dienste einer Datenendeinrichtung in einem virtuellen privaten Netzwerk (VPN).

Insbesondere bei klein- und mittelständischen Unternehmen, sogenannten KMUs ist der im Zusammenhang mit einem virtuellen privaten Netzwerk (VPN) verbundene Autonsierungsaufwand hinsichtlich eines Zugriffs auf Daten- und/oder Dienste einer Datenendeinrichtung des Unternehmens über ein Rechnernetz wie das Internet bisher aufgrund der erforderlichen System- und/oder Verwaltungsaufwendungen nicht beziehungsweise nicht unter wirtschaftlichen Gesichtspunkten und/oder mit vertretbarem Aufwand möglich.

Der Erfindung liegt in Anbetracht dieses Standes der Technik die Aufgabe zugrunde, ein Verfahren zur Erzeugung einer Identität von Klienten in einem erfindungsgemäßen Kommunikationssystems bereitzustellen, welches hinsichtlich der Beanspruchung von Netzwerkressourcen effizienter ist.

Zur technischen Lösung wird mit der vorliegenden Erfindung ein Verfahren mit den Merkmalen gemäß Oberbegriff des Anspruchs 1 vorgeschlagen, welches gekennzeichnet ist durch die Merkmale gemäß kennzeichnendem Teil des Anspruchs 1.

Der Erfindung liegt die Erkenntnis zugrunde, dass durch Nutzung wenigstens einer mit einer seitens des Mobilfunknetzes vorgegebenen Zeitinformation (T_{Netz}) synchronisierten Zeitinformation (T_{Klient}) auf einfache und kostengünstige Art und Weise eine Identität des Klienten in dem Kommunikationssystem erzeugt werden kann, welche hinsichtlich der Sicherheit vor unberechtigter beziehungsweise missbräuchlicher Nutzung verbessert ist, insbesondere da die Identität mit und/oder unter Nutzung einer nur für die beteiligten Parteien, also insbesondere dem Klienten und der dem einen Zugang ermöglichenden Partei, synchronisierten Zeitinformation erzeugt wird, die vorteilhafterweise für Dritte unbekannt ist.

Vorteilhafterweise wird die zur Erzeugung der identität des Klienten genutzte Zeitinformation (T_{Klient}) von einer seitens eines In dem Mobilfunknetz betreibbaren mobilen Endgerätes des Klienten und/oder seitens einer von dem mobilen Endgerät genutzten Mobilfunkteilnehmer-Identifikations-Moduls (SIM) vorhandenen Zeitgebereinrichtung bereitgestellt. Dadurch wird vorteilhafterweise eine in der Regel seitens eines Mobilfunknetzes gegebene Mobilfunknetzzeit oder dergleichen mobilfunknetzseitige Zeitinformation zur Synchronisierung der Zeitinformation seitens eines mobilen Endgerätes, insbesondere eines Mobilfunktelefons genutzt. Die Mobilfunknetzzeit oder dergleichen mobilfunknetzseitige Zeitinformation liefert dabei vorteilhafterweise eine im gesamten Mobilfunknetz einheitlich gültige Referenzinformation.

In einer weiteren Ausgestaltung der Erfindung wird die zur Erzeugung der Identität des Klienten genutzte Zeitinformation (T_{Klient}) bei Bedarf im Rahmen des Austauschs von Signalisierungsinformationen zwischen dem mobilen Endgerät und dem Mobilfunknetz mit der seitens des Mobilfunknetzes vorgegebenen Zeitinformation (T_{Netz}) synchronisiert. Die so gegebene Bedarfweise Synchronisierung ermöglicht vorteilhafterweise insbesondere eine Reduzierung hinsichtlich der Auslastung des Mobilfunknetzes beziehungsweise eine Entlastung der Einrichtungen des Mobilfunknetzes hinsichtlich des Austausches von entsprechenden Signalisierungsinformationen zur Synchronisierung. Vorteilhafterweise wird der Bedarf unter Berücksichtigung wenigstens einer Information hinsichtlich der Erreichbarkeit des mobilen Endgerätes im Mobilfunknetz bestimmt. So kann beispielsweise eine Bedarfsanforderung erzeugt werden, vorteilhafterweise automatisch, wenn das mobile Endgerät im Mobilfunknetz nicht erreichbar war, beispielsweise keinen Funkkontakt hatte. Bei der anschließenden Signalisierung hinsichtlich eines Wiederanmelden des mobilen Endgerätes im Mobilfunknetz, also bei Wiedererreichbarkeit des mobilen Endgerätes im Mobilfunknetz erfolgt dann vorteilhafterweise aufgrund und/oder unter Nutzung der Bedarfsinformation eine Synchronisierung der Zeitinformation.

In einer weiteren vorteilhaften Ausgestaltung der Erfindung wird die zur Erzeugung der Identität des Klienten genutzte Zeitinformation (T_{Klient}) zeitlich beabstandet im Rahmen des Austauschs von Signalisierungsinformationen zwischen dem mobilen Endgerät und dem Mobilfunknetz mit der seitens des Mobilfunknetzes vorgegebenen Zeitinformation (T_{Netz}) synchronisiert. Durch die so gegebene zeitlich beabstandet erfolgende Synchronisation ist ebenfalls vorteilhafterweise eine Reduzierung hinsichtlich der Auslastung des Mobilfunknetzes beziehungsweise eine Entlastung der Einrichtungen des Mobilfunknetzes hinsichtlich des Austausches von entsprechenden Signalisierungsinformationen zur Synchronisierung gegeben. Vorteilhafterweise sind die Zeitabstände seitens des Mobilfunknetzes vorgebbar, vorzugsweise automatisch bedarfsgerecht einstellbar.

Eine weitere vorteilhafte Ausgestaltung der Erfindung sieht vor, dass die zur Erzeugung der Identität des Klienten genutzte Zeitinformation (T_{Klient}) zumindest im Rahmen des Austauschs von Signalisierungsinformationen für den Aufbau, den Erhalt und/oder den Abbau einer Verbindung zwischen dem mobilen Endgerät und dem Mobilfunknetz mit der seitens des Mobilfunknetzes vorgegebenen Zeitinformation (T_{Netz}) synchronisiert wird.

Vorteilhafterweise erfolgt die Synchronisation der Zeitinformation (T_{Klient}) zumindest bei Nichterreichbarkeit des mobilen Endgerätes im Mobilfunknetz unter Nutzung wenigstens einer Zähleinrichtung. So kann vorteilhafterweise eine Synchronisierung erwirkt werden, wenn das mobile Endgerät nicht im Mobilfunknetz erreichbar ist beziehungsweise war, beispielsweise keinen Funkkontakt zum beziehungsweise mit dem Mobilfunknetz hatte. Eine bevorzugte Ausgestaltung der Erfindung sieht vor, dass die Zähleinrichtung seitens des Mobilfunknetzes vorgesehen ist, bei Nichterreichbarkeit des mobilen Endgerätes im Mobilfunknetz aktiviert wird und bei Wiedererreichbarkeit des mobilen Endgerätes im Mobilfunknetz einen von der Zähleinrichtung bestimmten Zählerwert an das mobile Endgerät überträgt, welcher seitens des mobilen Endgerätes zur Synchronisierung der Zeitinformation (T_{Klient}) genutzt wird. Dadurch wird vorteilhafterweise die Sicherheit hinsichtlich der Identitätserzeugung weiter gesteigert.

In einer weiteren vorteilhaften Ausgestaltung der Erfindung wird die Identität eines Klienten durch Kombination einer Kennung des Klienten in dem Rechnernetz mit einer Kennung des Klienten in dem Mobilfunknetz erzeugt. Durch die Kombination einer Kennung des Klienten in dem Rechnernetz mit einer Kennung des Klienten in dem Mobilfunknetz kann vorteilhafterweise auf einfache und kostengünstige Art und Weise eine Identität des Klienten in dem Kommunikationssystem erzeugt werden, welche hinsichtlich des Verwaltungs- und Handhabungsaufwandes reduziert und darüber hinaus hinsichtlich der Sicherheit vor unberechtigter beziehungsweise missbräuchlicher Nutzung weiter verbessert ist. Die erfindungsgemäße Kombination einer Kennung des Klienten in dem Rechnernetz mit einer Kennung des Klienten in dem Rechnernetz mit einer Kennung des Klienten in dem Mobilfunknetz zur Erzeugung der Identität des Klienten in dem Kommunikationssystem macht sich vorteilhafterweise die seitens eines Rechnernetzes und eines zellularen Mobilfunknetzes gegebenen Identitäten und deren Verfahren, Systeme und Methoden zur Authentisierung, Authentifizierung beziehungsweise Authentifikation und/oder Autorisierung zur nutze, so dass der mit der erfindungsgemäßen Kombination gegebene beziehungsweise im Zusammenhang stehende Aufwand hinsichtlich Verwaltung und/oder Handhabung reduziert beziehungsweise reduzierbar ist. Durch die Kombination von seitens des Rechnernetzes einerseits und seitens des zellularen Mobilfunknetzes andererseits gegebenen unterschiedlichen Kennungen des Klienten und deren Kombination zur Erzeugung einer Identität im Kommunikationssystem ist darüber hinaus auf einfache Art und Weise das Sicherheitsmaß der erzeugten Identität als auch deren Nutzungen im Rahmen von Authentisierung, Authentifizierung beziehungsweise Authentifikation und/oder Autorisierung gesteigert.

In einer vorteilhaften Ausgestaltung der Erfindung wird die Kennung des Klienten in dem Rechnernetz mit einem kryptographischen Algorithmus erzeugt, vorzugsweise seitens einer Datenendeinrichtung des Rechnernetzes, besonders bevorzugt seitens einer Datenendeinrichtung eines klein- und mittelständischen Unternehmens (KMU), welche an das Rechnernetz angeschlossen ist. In einer vorteilhaften Ausgestaltung der Erfindung ist die Datenendeinrichtung des KMUs ein AAA-Server eines VPNs des KMUs. Eine weitere vorteilhafte Ausgestaltung der Erfindung sieht vor, dass die Kennung des Klienten in dem Rechnernetz unter Nutzung einer Basiskennung des Klienten im Rechnernetz und einer Zählreinrichtung erzeugt wird, wobei die Zählreinrichtung vorzugsweise einen kryptographischen Algorithmus nutzend ausgebildet ist und besonderes bevorzugt Bestandteil der Datenendeinrichtung ist. Durch die erfindungsgemäße Verwendung einer Zählreinrichtung wird vorteilhafterweise eine Synchronisation der Kennung des Klienten in dem Rechnernetz und damit seitens des Kommunikationssystems realisiert, wodurch sich die Sicherheit der Identität und/oder deren Nutzung weiter steigern lässt. So kann beispielsweise eine im Rahmen der Nutzung unberechtigt beziehungsweise missbräuchlich abgefangene oder abgehörte Kennung vorteilhafterweise nicht noch einmal; also dann unberechtigt beziehungsweise missbräuchlich, genutzt werden.

In einer weiteren vorteilhaften Ausgestaltung der Erfindung wird die Kennung des Klienten in dem Mobilfunknetz mit einem kryptographischen Algorithmus erzeugt, vorzugsweise seitens eines in dem Mobilfunknetz betreibbaren mobilen Endgerätes des Klienten. Eine weitere Ausgestaltung der Erfindung sieht vor, dass die Kennung des Klienten in dem Mobilfunknetz unter Nutzung einer Basiskennung des Klienten im Mobilfunknetz und einer Zähleinrichtung erzeugt wird, wobei die Zählreinrichtung vorzugsweise einen kryptographischen Algorithmus nutzend ausgebildet ist und besonders bevorzugt Bestandteil des mobilen Endgerätes und/oder eines von dem mobilen Endgerät genutzten Mobilfunkteilnehmer-Identifikations-Moduls, einer sogenannten SIM (SIM: Subscriber Identifikation Modul) ist. Eine bevorzugte Ausgestaltung der Erfindung sieht vor, dass die Basiskennung des Klienten im Mobilfunknetz das im Mobilfunknetz betreibbare mobile Endgerät identifizierende Daten und/oder dem Nutzer des mobilen Endgerätes im Mobilfunknetz identifizierende Daten beinhaltet, wobei als das mobile Endgerät identifizierende Daten vorzugsweise die Gerätekennung, die sogenannte IMEI (IMEI: International Mobile Equipment Identity), und die dem Nutzer des mobilen Endgerätes im Mobilfunknetz identifizierenden Daten zumindest die dem Nutzer von einem Mobilfunknetzbetreiber zugeordnete netzspezifische Ruf-Nummer, die sogenannte MSISDN (MSISDN: Mobile Station Subscriber ISDN Number; ISDN: Integrated Services Digital Network) und/oder zumindest die Mobilfunkteilnehmerkennnung, die sogenannte IMSI (IMSI: International Mobile Subscriber Identifikation) beinhalten. Eine besonders vorteilhafte Ausgestaltung der Erfindung sieht vor, dass die Kennung des Klienten in dem Mobilfunknetz mittels einer seitens des Mobilfunkteilnehmer-Identifikations-Moduls (SIM (SIM: Subscriber Identity Module) ausführbaren Anwendung, einer sogenannten SAT-Anwendung (SAT: SIM Application Toolkit), erzeugt wird.

In einer besonders bevorzugten Ausgestaltung der Erfindung werden die Kennungen unabhängig voneinander erzeugt. Durch diese Maßnahme ist das Maß der Sicherheit der Identität und insbesondere deren Nutzungen im Rahmen von Authentisierung, Authentifikation und/oder Autorisierung weiter steigerbar, insbesondere da für eine unberechtigte beziehungsweise missbräuchliche Nutzung sowohl die Kennung des Klienten in dem Rechnernetz als auch die unabhängig von dieser erzeugte Kennung des Klienten im Mobilfunknetz bestimmt beziehungsweise erfasst werden müssten.

Eine weitere besonders vorteilhafte Ausgestaltung der Erfindung sieht vor, dass die Kennung des Klienten in dem Rechnernetz mit einem aus der Kennung des Klienten in dem Mobilfunknetz bestimmbaren Schlüssel, vorzugsweise einem symmetrischen Schlüssel, verschlüsselt wird. Dadurch ist das Maß der Sicherheit weiter steigerbar. Eine weitere vorteilhafte Ausgestaltung der Erfindung sieht vor, dass die Kennung des Klienten in dem Rechnernetz mit einem aus der Kennung des Klienten in dem Mobilfunknetz und dem Zählerstand einer synchronisierten Zähleinrichtung des Mobilfunknetzes bestimmbaren Schlüssel, vorzugsweise einem symmetrischen Schlüssel, verschlüsselt wird. Durch die Berücksichtigung des Zählerstandes einer synchronisierten Zähleinrichtung des Mobilfunknetzes zusätzlich zu der Klienten in dem Mobilfunknetz und deren Verwendung zur Verschlüsselung der Kennung des Klienten in dem Rechnernetz ist eine weitere Steigerung der Sicherheit der erfindungsgemäß kombinativ zu erzeugenden Identität und deren Nutzung weiter steigerbar. Vorteilhafterweise wird die Verschlüsselung automatisch seitens einer Datenendeinrichtung des Rechnernetzes vorgenommen, besonders bevorzugt seitens einer Datenendeinrichtung des Rechnernetzes, welche Daten und/oder Dienste für ein Zugriff über das Rechnernetz zur Verfügung stellt beziehungsweise einer Datenendeinrichtung, welche mit einer entsprechende Daten und/oder Dienste zur Verfügung stellenden Datenendeinrichtung verbunden beziehungsweise verbindbar ist.

In einer weiteren Ausgestaltung der Erfindung ist der Klient ein Prozess und/oder ein Benutzer einer Datenendeinrichtung in dem Rechnernetz und/oder ein Prozess und/oder ein Benutzer eines in dem Mobilfunknetz betreibbaren mobilen Endgerätes.

Eine vorteilhafte Ausgestaltung der Erfindung sieht vor, dass die erfindungsgemäße Identität zur Authentisierung eines Klienten genutzt wird. Vorteilhafterweise wird dabei die Identität von einer Datenendeinrichtung des Rechnernetzes über eine Kommunikationsverbindung des Rechnernetzes von dem Klienten angefordert und von dem Klienten über die Kommunikationsverbindung an die Datenendeinrichtung des Rechnernetzes übertragen. Eine weiteren Ausgestaltung der Erfindung sieht vor, dass die Kennung des Klienten im Mobilfunknetz von einer Datenendeinrichtung des Rechnernetzes über die Kommunikationsverbindung des Rechnernetzes von dem Klienten angefordert wird. Vorteilhafterweise wird die Anforderung nach der Kennung des Klienten im Mobilfunknetz über eine Kommunikationsverbindung des Mobilfunknetzes an ein in dem Mobilfunknetz betreibbares mobiles Endgerät des Klienten gerichtet, seitens des mobilen Endgerätes des Klienten die Kennung des Klienten in dem Mobilfunknetz erzeugt und die erzeugte Kennung des Klienten in dem Mobilfunknetz von dem mobilen Endgerätes des Klienten über eine und/oder unter Nutzung einer Kommunikationsverbindung des Mobilfunknetzes an die Datenendeinrichtung des Rechnernetzes übertragen. Eine besonders bevorzugte Ausgestaltung der Erfindung sieht vor, dass die Kommunikationsverbindung des Mobilfunknetzes eine eine Verbindung in das Rechnernetz ermöglichende Kommunikationsverbindung ist, vorzugsweise eine Protokolle gemäß der WAP-Spezifikation (WAP: Wireless Application Protocol) nutzende Kommunikationsverbindung ist.

Vorteilhafterweise wird seitens der Datenendeinrichtung des Rechnernetzes die Kennung des Klienten im Rechnernetz erzeugt und zur Erzeugung der Identität des Klienten mit der Kennung im Mobilfunknetz verschlüsselt. Die erfindungsgemäß zur Authentisierung nutzbare Identität des Klienten im Kommunikationssystem wird dabei hinsichtlich der Sicherheit weiter verbessert, insbesondere da die zum Verschlüsseln erforderliche Kennung des Klienten im Mobilfunknetz zunächst angefordert und vorzugsweise nur auf Anforderung seitens der Datenendeinrichtung des Rechnernetzes zur Verfügung steht und genutzt wird.

Vorteilhafterweise wird die erfindungsgemäße Identität zur Authentisierung beziehungsweise Authentifikation eines Klienten im Kommunikationssystem genutzt, wobei die Nutzung sowohl zur Authentifizierung im Mobilfunknetz als auch zur Authentifizierung im Rechnernetz nutzbar ist. Eine erfindungsgemäße Identität kann so vorteilhafterweise zur Authentifikation von über das Mobilfunknetz und/oder das Rechnernetz mittels entsprechenden Endgeräten erfolgenden Einkäufen von Waren und/oder Dienstleistungen oder dergleichen Anwendungen des elektronischen Handelns, dem sogenannten E-Commerce mit einem hohen Maß an Sicherheit genutzt werden. Insgesamt lässt sich dadurch das Vertrauen in einen entsprechenden Handel zwischen den Handelspartnern steigern.

In einer bevorzugten Ausgestaltung der Erfindung erfolgt die erfindungsgemäße Authentifizierung seitens einer Datenendeinrichtung des Rechnemetzes. Vorteilhafterweise erfolgt dabei im Rahmen der Authentifizierung eine Zerlegung der Identität in die Kennung des Klienten im Rechnernetz und in die Kennung des Klienten im Mobilfunknetz. Vorteilhafterweise wird die im Rahmen der Zerlegung der Identität bestimmte beziehungsweise gewonnene Kennung des Klienten im Rechnernetz authentifiziert, vorzugsweise durch wenigstens einen Vergleich seitens einer Datenendeinrichtung des Rechnernetzes.

Gemäß einer weiteren besonders bevorzugten Ausgestaltung der Erfindung sieht das erfindungsgemäße Verfahren zur Autorisierung eines Zugriffs eines Datenendgerätes auf Daten und/oder Diensten einer Datenendeinrichtung in einem Rechnernetz genutzt.

Gegenstand der vorliegenden Erfindung ist ferner ein Kommunikationssystem bestehend aus einem Rechnernetz mit Datenendeinrichtung und einem zellularen Mobilfunknetz, vorzugsweise gemäß dem GSM- und/oder UMTS-Funknetzstandard, mit darin betreibbaren mobilen Endgeräten, wobei die Datenendeinrichtungen, die Einrichtungen des Mobilfunknetzes, insbesondere die für die Verwaltung, den Aufbau und/oder die Aufrechterhaltung einer Kommunikationsverbindung im Mobilfunknetz beteiligten Einrichtungen des Mobilfunknetzes, und/oder die mobilen Endgeräte zur Ausführung und/oder Nutzung eines erfindungsgemäßen Verfahrens ausgebildet sind.

Gegenstand der Erfindung ist ferner ein mobiles Endgerät zur Nutzung in einem zellularen Mobilfunknetz mit einem Mobilfunkteilnehmer-Identifikations-Modul (SIM) sowie ein Mobilfunkteilnehmer-Identifikations-Modul (SIM) zur Nutzung mit einem mobilen Endgerät zum Betrieb in einem zellularen Mobilfunknetz, welche zur Ausführung eines erfindungsgemäßen Verfahrens in einem erfindungsgemäßen Kommunikationssystem ausgebildet sind. In einer besonders vorteilhaften Ausgestaltung der Erfindung ist das Verfahren als Anwendungsprogramm seitens des Mobilfunkteilnehmer-Identifikations-Moduls (SIM) gespeichert und/oder seitens desselben ausführbar. Das in dem Mobilfunknetz betreibbare mobile Endgerät ist vorteilhafterweise ein Mobilfunktelefon und/oder eine im Zusammenhang mit einer Datenendeinrichtung nutzbare, im Mobilfunknetz betreibbare Steckkarte, vorzugsweise im PCMCIA-Format, oder ein im Mobilfunknetz betreibbares Dongle, vorzugsweise mit USB-Anschluss zum Verbinden mit einer Datenendeinrichtung.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Darstellung Prinzipdarstellung ein erfindungsgemäßes Kommunikationssystem zur Nutzung einer erfindungemäßen Identität für eine Zugriffsautorisierung auf Daten und/oder Dienste einer Datenendeinrichtung in einem Rechnernetz;
- Fig. 2: in einer schematischen Darstellung ein Ablaufdiagramm eines Ausführungsbeispiels einer erfindungsgemäßen Synchronisation einer erfindungsgemäßen Identität für eine Zugriffsautorisierung und
- Fig. 3: in einer schematischen Darstellung ein Ablaufdiagramm eines Ausführungsbeispiels einer erfindungsgemäßen Resynchronisation einer erfindungsgemäßen Identität für eine Zugriffsautorisierung bei und/oder nach nicht Erreichbarkeit in einem Mobilfunknetz.

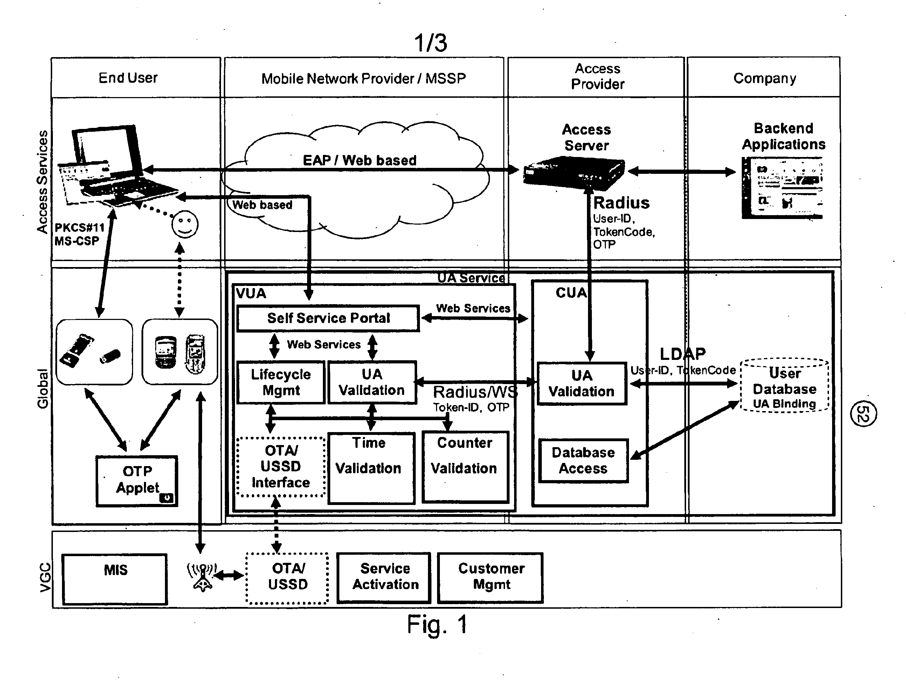

In Fig. 1 ist in einer schematischen Darstellung der Zugriff eines Klienten (End User) auf ein virtuelles privates Netzwerk (VPN), vorliegend in Form eines verschiedene Datenendeinrichtungen aufweisenden Rechnernetzes eines Unternehmens in Form eines sogenannten Intranet (Company). Der Klient (End User) ist dabei vorliegend Angestellter des Unternehmens und erledigt beispielsweise Arbeiten für das Unternehmen von seinem Wohnort oder dergleichen unternehmensfernen Orten aus. Dazu nutzt der Klient (End User) vorliegend für einen mobilen Einsatz eine mobile beziehungsweise portable Datenendeinrichtung, vorliegend in Form eines Notebocks und ein in einem Mobilfunknetz betreibbares mobiles Endgerät (Mobile Phone). Dabei greift der Klient (End User) greift dabei über das Mobilfunknetz und/oder über das Internet als Rechnernetz auf das Intranet des Unternehmens (Company) zu. Das Unternehmensnetzwerk/Intranet (Company) ist dabei vorteilhafterweise über ein sogenanntes "Site to Site VPN" über das Internet an das Mobilfunknetz eines Mobilfunkbetreibers angeschlossen, vorzugsweise über den in Fig. 1 symbolisch dargestellten, eine sogenannte Security Appliance bereitstellenden Access Server (Access Provider).

Die Zugriffe auf das Unternehmensnetzwerk (Company) über das Mobilfunknetz (Mobile Network) beziehungsweise das Rechnernetz (Internet) erfolgen dabei unter Nutzung wenigstens einer mit einer seitens des Mobilfunknetzes vorgegebenen Zeitinformation (T_{Netz}) synchronisierten Zeitinformation (T_{Klient}) erzeugten Identität des Klienten. Die Synchronisation der Zeitinformationen ist in Fig. 1 dabei symbolisch durch die strichpunktierte Verbindung zwischen der unten dargestellten OTA/USSD-Einrichtung ("OTA/USSD") des Mobilfunknetzes (VGC) und der darüber angeordneten Authentifizierungsdienste (UA-Service) darstellenden beziehungsweise bereitstellenden OTA/USSD-Schnittstelle ("OTA/USSD Interface") dargestellt.

Bei der Erzeugung der Kennung kommt vorliegend ferner eine durch Kombination einer Kennung des Klienten in dem Rechnernetz mit einer Kennung des Klienten in dem Mobilfunknetz erzeugte Identität zum Einsatz. Dabei kommt ein hier nicht explizit dargestelltes Authentifizierungssystem zum Einsatz, welches vorliegend seitens des Mobilfunknetzes gegeben ist und eine gesicherte 2-Faktor-Authentifikation für Verbindungen zwischen den jeweiligen Klienten (End User) und dem Unternehmensnetzwerk (Company) zur Verfügung stellt. Dabei wird ein gesicherter Zugriff der Klienten (End User) auf das Unternehmensnetzwerk (Company) bereitgestellt (Secure VPN).

Fig. 1 lässt ferner die einzelnen im Rahmen einer Authentifizierung beziehungsweise Authentifikation eines Zugriffs eines Klienten (End User) auf das Netzwerk eines Unternehmens (Company) erkennen. Der Klient (End User) beziehungsweise dessen Datenendgerät ist - wie bereits erläutert - über eine geeignete Kommunikationsverbindung mit dem Rechnernetz verbunden. Der Zugang zu dem Rechnernetz erfolgt dabei über einen sogenannten Zugangsbereitsteller (Access-Provider), über eine drahtlose und/oder drahtgebundene Verbindung zwischen dem beziehungsweise den jeweiligen Datenendgeräten des Klienten (End User), vorliegend beispielsweise über ein in ein Mobilfunknetz betreibbares mobiles Endgerät, eine sogenannte WLAN-Verbindung oder eine DSL-Verbindung. Über das Rechnernetz (Internet) ist der Klient (End User) dann mit entsprechenden Datenendeinrichtungen des Unternehmens (Company) verbindbar. Der Zugriff auf die Datenendeinrichtungen des Unternehmens (Company) erfolgt dabei über eine, in Fig. 1 nicht explizit dargestellte, die Authentifizierung vornehmende Übergangseinheit des Unternehmens UA (UA: User Authentication Gateway). Das UA-Gateway ist dabei vorliegend seitens des Unternehmens (Company) angeordnet und über das Internet mit dem Access-Provider für den Zugang des Klienten (Endusers) zum Rechnernetz (Internet), mit einer seitens des Unternehmensnetzwerks bevorrateten Datenbank mit Einträgen von Klienten (Directory of User Database) und mit Datenendeinrichtungen eines Mobilfunknetzbetreibers (Mobile Network Provider) verbunden. Seitens des Mobilfunknetzbetreibers (Mobile Network Provider) sind dabei Einrichtungen vorgesehen, die entsprechende den Klienten authentifizierende Dienste (UA-Service) bereitstellen, welche insbesondere die Synchronisierung der Zeitinformation ("OTA/USSD") und die Kennung des Klienten (Enduser) in dem Mobilfunknetz betreffen. Bei dem Zugriffs eines Klienten (End User) auf das Intranet eines Unternehmens (Company) erfolgt der Zugriff des Klienten (End User) auf das Unternehmensnetzwerk über einen mobilen Zugang des Klienten (End User) über ein Mobilfunknetz in das Rechnernetz (Intenetz). Über den Mobilfunknetzzugang eines Mobilfunknetzbetreibers (Mobile Network Provider/MSSP) wird über entsprechende Kommunikationsdienste (Service Channel, Webservices) der mobile Zugriff des Klienten (End User) über einen entsprechenden Access-Provider mittels geeigneter Datenendeinrichtungen, vorliegend beispielsweise einem Access-Server (AAA-Server) mit einem gesicherten Zugang ermöglicht.

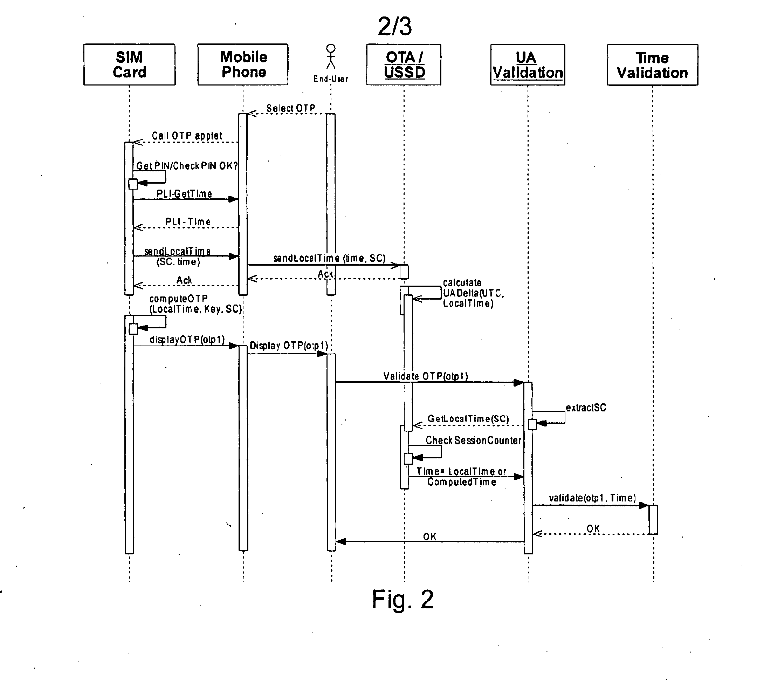

Das in Fig. 2 schematisch dargestellte Ablaufdiagramm zeigt ein prinzipielles Ausführungsbeispiel einer Synchronisation einer erfindungsgemäßen Identität für eine Autorisierung eines Zugriffs auf Daten und/oder Dienste einer Datenendeinrichtung in einem virtuellen privaten Netzwerk und die dabei in beziehungsweise zwischen den verschiedenen Einrichtungen eines ein Rechnernetz und ein zellulares Mobilfunknetz aufweisenden Kommunikationssystems.

Der Nutzer (End User) eines Endgerätes initiiert in dem mit "Select OTP" gekennzeichneten Verfahrens- beziehungsweise Ablaufschritt seitens seines mobilen Endgerätes (Mobile Phone) die Erzeugung einer Identität.

Das mobile Endgerät (Mobile Phone) des Nutzers (End User) aktiviert daraufhin eine seitens der in dem mobilen Endgerät (Mobile Phone) des Nutzers (End User) eingesetzten SIM-Karte (SIM-Card; SIM: Subscriber Identity Module (Mobilfunkteilnehmeridentifikationsmodul)) eine Identitätserzeugungs-anwendung (Call OTP applet). Dabei wird zur Synchronisierung der Zeitinformation die seitens des mobilen Endgerätes (Mobile Phone) beziehungsweise der SIM-Karte (SIM Card) gegebene Zeitinformation (Local Time) bestimmt und über die in Fig. 1 dargestellte OTA/USSD-Schnittstelle an die seitens des Mobilfunknetzes gegebene, im gesamten Mobilfunknetz einheitlich geltende Zeitinformationen als Referenzwerte bereitstellende Einrichtung, vorliegend OTA/USSD (vergleiche Fig.1 und Fig. 2), mit einer Kennung für die Identitätenerzeugung (SC; SC: Session Counter) übertragen.

Seitens der OTA/USSD wird vorliegend die Differenz zwischen der Zeitinformation (T_{Netz}) im Mobilfunknetz und der Zeitinformation (T_{Klient}; Local Time) seitens des mobilen Endgerätes (Mobile Phone) des Nutzers (End User) berechnet und ein entsprechend berechneter Korrekturwert an das mobile Endgerät (Mobile Phone) des Nutzers (End User) und von diesem an die von diesem genutzte SIM-Karte (SIM Card) übertragen. Gleichzeitig wird vorliegend seitens der OTA/USSD in einer entsprechenden Anwendung und/oder Einrichtung ein Zähler aktiviert, der die entsprechende Identitätenerzeugung für eine später folgende Überprüfung (Check Session Counter) erfasst.

Seitens der SIM-Karte (SIM Card) des Nutzers (End User) wird mit dem berechneten Korrekturwert Zeitinformation (T_{Klient}; Local Time) seitens des mobilen Endgerätes (Mobile Phone) des Nutzers (End User) synchronisiert und mit der synchronisierten Zeitinformation (T_{Klient}; Local Time) eine Identität (OTP; OTP=Funktion von (LocalTime, Key, SC)) durch Berechnung erzeugt. Die Identität (OTP) wird dann seitens des mobilen Endgerätes, (Mobile Phone) dem Nutzer (End User) angezeigt (Display OTP(otp1) und zur Validierung an die seitens des Mobilfunknetzes vorgesehene Einrichtung (UA Validation; UA: User Authentication) übertragen.

Seitens der Validierungseinrichtung (UA Validation) wird aus der Identität (OTP(otp1)) die Kennung für die Identitätenerzeugung (SC) extrahiert. Mit der extrahierten Kennung für die Identitätenerzeugung (SC) wird dann seitens der OTA/USSD die zugehörige Zeitinformation abgefragt (Get Local Time (SC)) und der entsprechende Zähler überprüft (Check Session Counter). Im Ergebnis liefert (Time = Local Time or Computed Time) die OTA/USSD dann die seitens des mobilen Endgerätes vorliegende oder die durch Berechnung seitens des mobilen Endgerätes vorliegende Zeitinformation (T_{Klient}; Local Time). Diese Zeitinformation wird von der Validierungseinrichtung (UA Validation) an eine Einrichtung zur Validierung der Zeitinformation (Time Validation) übertragen und die bestimmte Zeitinformation der Identität (OTP(otp1) entsprechend validiert (validate (otp1, Time)). Bei positiver Validierung, beispielsweise Übereinstimmung, der Zeitinformation wird zunächst dies der Validierungseinrichtung (UA Validation) signalisiert. Die Validierungseinrichtung (UA Validation) signalisiert anschließend beziehungsweise daraufhin die Validierung der Identität dem Nutzer (End User).

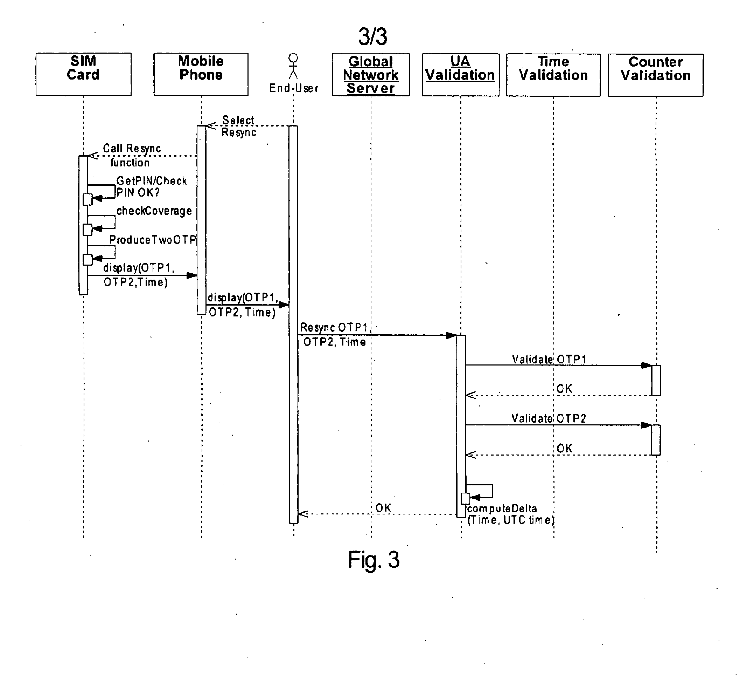

Das in Fig. 3 schematisch dargestellte Ablaufdiagramm zeigt eine Resynchronisation einer Identität für eine Zugriffsautorisierung bei und/oder nach nicht Erreichbarkeit eines mobilen Endgerätes (Mobile Phone) eines Nutzers (End Users) in einem Mobilfunknetz.

Der Nutzer (End User) eines Endgerätes initiiert in dem mit "Select Resync" gekennzeichneten Verfahrens- beziehungsweise Ablaufschritt seitens seines mobilen Endgerätes (Mobile Phone) die Erzeugung einer Identität. Die Initiierung des Verfahrens- beziehungsweise Ablaufschritts "Select Resync" kann dabei vorteilhafterweise automatisch bei Feststellung einer Nichterreichbarkeit im Mobilfunknetz seitens des mobilen Endgerätes erfolgen.

Das mobile Endgerät.(Mobile Phone) des Nutzers (End User) aktiviert daraufhin eine seitens der in dem mobilen Endgerät (Mobile Phone) des Nutzers (End User) eingesetzten SIM-Karte (SIM-Card; SIM: Subscriber Identity Module (Mobilfunkteilnehmeridentifikationsmodul)) eine entsprechende Resynchronisationsfunktion (Call Resnyc function). Im Rahmen der Resynchronisationsfunktion (Call Resnyc function) wird seitens der SIM-Karte (SIM Card) die Erreichbarkeit des Mobilfunknetzes überprüft (check Coverage) und zwei Kennungen beziehungsweise Identitäten erzeugt (Produce two OTP)- Die erzeugten Kennungen beziehungsweise Identitäten werden dann seitens des mobilen Endgerätes (Mobile Phone) dem Nutzer (End User) gemeinsam mit der Zeitinformation (Time) des mobilen Endgerätes (Mobile Phone) angezeigt (Display OTP1, OTP2, Time) und zur Validierung an die seitens des Mobilfunknetzes vorgesehene Einrichtung (UA Validation; UA: User Authentication) übertragen (Resync OTP1, OTP2, Time).

Seitens der Validierungseinrichtung (UA Validation) wird unter Nutzung einer Einrichtung (Counter Validation) zunächst die erste Identität (OTP1) und dann bei positivem Validierungsergebnis die zweite Identität (OTP2) validiert. Sind beide Identitäten positiv validiert, wird seitens der Validierungseinrichtung (UA Validation) eine Zeitdifferenz berechnet (compute Delta (Time, UTC Time). Wird diese Zeitdifferenz innerhalb eines vorgebbaren Rahmens, innerhalb dessen die Validierung der Identitäten (OTP1, OTP2) erfolgen muss beziehungsweise erfolgen musste, eingehalten, wird eine entsprechende positive Validierungsinformation von der Validierungseinrichtung (UA Validation) an den Nutzer (End User) übertragen.

Weitere Einzelheiten, Merkmale und Vorteile der Erfindung ergeben sich aus den nachfolgend wiedergegebenen vorteilhaften Anwendungsszenarien der Erfindung:
1. Erreichbarkeit im Mobilfunknetz (In Network Coverage support)
   - Synchronisation der Zeitinformation des mobilen Endgerätes und der Zeitinformation eines Validierungsservers mittels eines Dienstes des Mobilfunknetzes, beispielsweise USSD- oder SMS-basiert. (Synchronize handset time and Validation Server time via a network service, which may be USSD or SMS based).
   - Der Dienst des Mobilfunknetzes weiß aufgrund eines vorgelegten von dem Validierungsserver vorgelegten Sessioninformationselementes (SC), welches zerlegt in der Identität (OTP; OTP One Time Password) enthalten sein kann, wann er eine relative Zeit berechnen muss. (The network service knows when to compute a relative time, by getting presented a session information element (SC) from the Validation Server, which maybe hashed into the One Time Password).
   - Wenn das mobile Endgerät mit dem Mobilfunknetz verbunden ist, also in selbigem erreichbar ist, werden die Zeitinformationen immer synchronisiert. (When the handset is connected to the network time sources are always synchronized).
   - Falls das mobile Endgerät nicht im Mobilfunknetz erreichbar ist, werden Änderungen der Zeitinformationen von der SIM-Karte verfolgt (aufgespürt), und auf intelligente Art und Weise an einen Server des Mobilfunknetzes weitergegeben, um für die meisten Anwendungsanforderungen eine Synchronisierung mit der Zeitinformation im Mobilfunknetzwerk sicherstellen zu können. (Timer changes are tracked by the SIM for the out of coverage support and are pushed to the network server in an intelligent way to support a synchronized network time for most out of coverage requests).
2. Nichterreichbarkeit im Mobilfunknetz (Out of network coverage support)
   - Die seitens des mobilen Endgerätes gegebene lokale Zeit wird von der SIM-Karte zusammen mit aufgespürten Zeitinformationsveränderungen genutzt, um die Identität (OTP) zu erzeugen. (Local Time is used by the SIM together with tracked time changes to compute the OTP).
   - Zeitberechnungen im Mobilfunknetz basieren auf der letzten positiv synchronisierten Zeitinformation. (Timing computations in the network are based on the latest positive synchronization time).
   - Relative Zeitinformationen stellen einen Sicherheitsmechanismus bereit, wenn der Zeitgeber beziehungsweise die Zeitinformation des mobilen Endgerätes nicht ausgeschaltet ist (beispielsweise Zurückgesetzt ist, bei einem Batteriewechsel oder einem Batterieproblem). (Relative timings provide a secure mechanism when the handset clock has not been switched off (e.g. or reset, e.g. battery change, battery problem).
3. Nichterreichbarkeit im Mobilfunknetz und außerhalb einer Synchronisation der Zeitinformation (Out of Network Coverage and out of time sync)
   - Der Nutzer kann ein Zählverfahren als einen Sicherungsalgorithmus nutzen, bis die Erreichbarkeit im Mobilfunknetz wieder gegeben ist. (user may use a counter method as a fallback algorithm until in coverage again).
   - Zur Steigerung der Sicherheit kann der Nutzer Ursprungszeiten mittels eines auf Identitäten (OTPs) (oder zwei aufeinanderfolgenden Identitäten) und einer Zeitinformation basierenden beziehungsweise zurückgreifenden Zählers wieder synchronisieren. Die Identitäten (OTPs) (oder zwei aufeinanderfolgenden Identitäten) und die Zeitinformation, hat der Nutzer dabei an eine Administrator-(Überwacher-) oder eine Self-Service- (Selbstbedienungs-) Schnittstelle zu übertragen (die Werte werden von einer Resynchronisationsfunktion auf der SIM angezeigt). (To increase security user can resynchronize time sources via a counter based OTPs (or 2 consecutive OTP) and a TIME, which the user has to provide to the administrator or the self service interface (these values are displayed by the resynchronize function on the SIM).

Um den Mobilfunknetzverkehr zu minimieren kann der Validierungsserver mit seinen lokalen Zeitquellen zunächst und nur bei dem Mobilfunknetzserver anfragen, wenn der erste Validierungsversuch fehl schlägt. Der Mobilfunknetzserver kann, in Abhängigkeit des letzten Zeitpunkts an dem das mobile Endgerät beziehungsweise die SIM im Mobilfunknetz erreichbar war, die genauere Zeitquelle bereitstellen. Der Validierungsserver kann sicher seitens des Unternehmens oder seitens des Mobilfunknetzbetreibers laufen beziehungsweise eingerichtet sein. (To minimize network traffic Validation Server may try with its local time sources first and only ask the network server, when the first validation attempt failed. The network server may provide the more accurate time source depending on the last time the handset/SIM was in coverage. Validation Servers can securely run at the corporate or at mobile network provider).

Die in den Figuren der Zeichnung dargestellten Ausführungsbeispiele der Erfindung und die wiedergegebenen Anwendungsszenarien der Erfindung dienen lediglich der Erläuterung der Erfindung und sind für diese nicht beschränkend.

## Patentansprüche

1. Verfahren zur Erzeugung einer Identität von Klienten in einem ein Rechnernetz und ein zellulares Mobilfunknetz aufweisenden Kommunikationssystem,
wobei die Identität eines Klienten unter Nutzung wenigstens einer mit einer seitens des Mobilfunknetzes vorgegebenen Zeitinformation T_{Netz} synchronisierten Zeitinformatiory, T_{Klient}, erzeugt wird,
wobei die zur Erzeugung der Identität des Klienten genutzte Zeitinformation, T_{Klient}, von einer seltens eines in dem Mobilfunknetz betreibbaren mobilen Endgerätes des Klienten und/oder seitens einer von dem mobilen Endgerät genutzten Mobilfunkteilnehmer-Identifikations-Moduls, SIM, vorhandenen Zeitgebereinrichtung bereitgestellt wird, **dadurch gekennzeichnet, dass**
die zur Erzeugung der Identität des Klienten genutzte ZeltInformation, T_{Klient}, bei Bedarf Im Rahmen des Austauschs von Signalisierungsinformationen zwischen dem mobilen Endgerät und dem Mobilfunknetz mit der seitens des Mobilfunknetzes vorgegebenen Zeitinformation (T_{Netz}) synchronisiert wird.

2. Verfahren nach Anspruch 1, **dadurch gekennzeichnet, dass** der Bedarf unter Berücksichtigung wenigstens einer Information hinsichtlich der Erreichbarkeit des mobilen Endgerätes im Mobilfunknetz bestimmt wird.

3. Verfahren nach Anspruch 1 oder Anspruch 2, **dadurch gekennzeichnet, dass** die zur Erzeugung der identität des Klienten genutzte Zeitinformation, T_{Klient}, zeltlich beabstandet im Rahmen des Austauschs von Signalisierungsinformationen zwischen dem mobilen Endgerät und dem Mobilfunknetz mit der seitens des Mobilfunknetzes vorgegebenen Zeitinformation, T_{Netz,} synchronislert wird.

4. Verfahren nach einem der Ansprüche 1 bis 3, **dadurch gekennzeichnet, dass** die zur Erzeugung der Identität des Klienten genutzte Zeitinformation, T_{Klient}, zumindest im Rahmen des Austauschs von Signalisierungsinformationen für den Aufbau, den Erhalt und/oder den Abbau einer Verbindung zwischen dem mobilen Endgerät und dem Moblifunknetz mit der seltens des Mobilfunknetzes vorgegebenen Zeltinformation_{,} T_{Netz}, synchronisiert wird.

5. Verfahren nach einem der Ansprüche 1 bis 4, **dadurch gekennzeichnet, dass** die Synchronisation der Zeitlnformation,T_{Klient}, zumindest bei Nichterrelchbarkeit des mobilen Endgerätes im Mobilfunknetz unter Nutzung wenigstens einer Zähleinrichtung erfolgt.

6. Verfahren nach Anspruch 5, **dadurch gekennzeichnet, dass** die Zähleinrichtung seitens des Mobilfunknetzes vorgesehen ist, bei Nlchterreichbarkeit des mobilen Endgerätes Im Mobilfunknetz aktiviert wird und bei Wiedererreichbarkelt des mobilen Endgerätes im Mobilfunknetz einen von der Zähleinrichtung bestimmten Zählerwert an des mobile Endgerät überträgt, welcher seitens des mobilen Endgerätes zur Synchronisierung der Zeitinformation,T_{Klient}, genutzt wird.

7. Verfahren nach einem der Ansprüche 1 bis 6, **dadurch gekennzeichnet, dass** die Identität des Klienten durch Kombination einer Kennung des Klienten in dem Rechnernetz mit einer Kennung des Klienten in dem Mobilfunknetz erzeugt wird.

8. Verfahren nach Anspruch 7, **dadurch gekennzeichnet, dass** die Kennung des Klienten in dem Rechnernetz mit einem kryptographischen Algorithmus erzeugt wird, vorzugsweise seitens einer Datenendeinrichtung des Rechnernetzes.

9. Verfahren nach Anspruch 7 oder Anspruch 8, **dadurch gekennzeichnet, dass** die Kennung des Klienten in dem Rechnernetz unter Nutzung einer Basiskennung des Klienten im Rechnernetz und einer Zähleinrichtung erzeugt wird, wobei die Zähleinrichtung vorzugsweise einen kryptographischen Algorithmus nutzend ausgebildet ist und besonders bevorzugt Bestandteil der Datenendeinrichtung ist.

10. Verfahren nach einem der Ansprüche 7 bis 9, **dadurch gekennzeichnet, dass** die Kennung des Klienten In dem Mobilfunknetz mit einem kryptographischen Algorithmus erzeugt wird, vorzugsweise seitens eines In dem Mobilfunknetz betreibbaren mobilen Endgerätes des Klienten,

11. Verfahren nach einem der Ansprüche 7 bis 10, **dadurch gekennzeichnet, dass** die Kennung des Klientenin dem Mobilfunknetz unter Nutzung einer Basiskennung des Klienten im Mobilfunknetz und einer Zähleinrichtung erzeugt wird, wobei die Zähleinrichtung vorzugsweise einen kryptographischen Algorithmus nutzend ausgebildet ist und besonders bevorzugt Bestandteil des mobilen Endgerätes und/oder eines von dem mobilen Endgerät genutzten Mobilfunkteilnehmer-Identifikations-Moduls, SIM, ist.

12. Verfahren nach einem der Ansprüche 7 bis 11, **dadurch gekennzeichnet, dass** die Kennungen unabhängig voneinander erzeugt werden.

13. Verfahren nach einem der Ansprüche 7 bis 12, **dadurch gekennzeichnet, dass** die Kennung des Klienten in dem Rechnernetz mit einem aus der Kennung des Klienten In dem Mobilfunknetz bestimmbaren Schlüssel, vorzugsweise einem symmetrischen Schlüssel, verschlüsselt wird.

14. Verfahren nach einem der Ansprüche 7 bis 13, **dadurch gekennzeichnet, dass** die Kennung des Klienten in dem Rechnernetz mit einem aus der Kennung des Klienten in dem Mobllfunknetz und dem Zählerstand einer synchronisierten Zähleinrichtung des Mobilfunknetzes bestimmbaren Schlüssel; vorzugsweise einem symmetrischen Schlüssel, verschlüsselt wird.

15. Verfahren nach einem der Ansprüche 1 bis 14, **dadurch gekennzeichnet, dass** der Klient ein Prozess und/oder ein Benutzer einer Datenendeinrichtung in dem Rechnernetz und/oder ein Prozess und/oder ein Benutzer eines in dem Mobilfunknetz betreibbaren mobilen Endgerätes ist.

16. Verfahren nach einem der Ansprüche 1 bis 15, **dadurch gekennzeichnet, dass** die Identität zur Authentislerung eines Klienten genutzt wird.

17. Verfahren nach Anspruch 16, **dadurch gekennzeichnet, dass** die Identität von einer Datenendeinrichtung des Rechnernetzes über eine Kommunikationsverbindung des Rechnernetzes von dem Klienten angefordert und von dem Klienten über die Kommunikationsverbindung an die Datenendeinrichtung des Rechnernetzes übertragen wird.

18. Verfahren nach Anspruch 18 oder Anspruch 17, **dadurch gekennzeichnet, dass** die Kennung des Klienten im Mobilfunknetz von einer Datenendeinrichtung des Rechnernetzes über eine Kommunikationsverbindung des Rechnernetzes von dem Klienten angefordert wird.

19. Verfahren nach Anspruch 18, **dadurch gekennzeichnet, dass** die Anforderung nach der Kennung des Klienten im Mobilfunknetz über eine Kommunikationsverbindung des Mobilfunknetzes an ein in dem Mobilfunknetz betreibbares mobiles Endgerät des Klienten gerichtet, seitens des mobilen Endgerätes des Klienten die Kennung des Klienten in dem Mobilfunknetz erzeugt, und die erzeugte Kennung des Klienten in dem Mobllfunknetz von dem mobilen Endgerät des Klienten über eine und/oder unter Nutzung einer Kommunikationsverbindung des Mobilfunknetzes an die Datenendeinrichtung des Rechnernetzes übertragen wird.

20. Verfahren nach Anspruch 19, **dadurch gekennzeichnet, dass** die Kommunikationsverbindung des Mobilfunknetzes eine eine Verbindung in das Rechnernetz ermöglichende Kommunikationsverbindung ist, vorzugsweise eine Protokolle gemäß der WAP-Spezifikation nutzende Kommunikationsverbindung.

21. Verfahren nach einem der Ansprüche 18 bis 20, **dadurch gekennzeichnet, dass** seitens der Datenendeinrichtung des Rechnernetzes die Kennung des Klienten im Rechnernetz erzeugt und zur Erzeugung der Identität des Klienten mit der Kennung des Klienten im Mobilfunknetz verschlüsselt wird.

22. Verfahren nach einem der Ansprüche 16 bis 21, **dadurch gekennzeichnet, dass** die Authentiflzierung seitens einer Datenendeinrichtung des Rechnernetzes erfolgt.

23. Verfahren nach einem der Ansprüche 16 bis 22, **dadurch gekennzeichnet, dass** im Rahmen der Authentifizierung eine Zerlegung der Identität in die Kennung des Klienten im Rechnernetz und in die Kennung des Klienten im Mobilfunknetz erfolgt.

24. Verfahren nach einem der Ansprüche 16 bis 23, **dadurch gekennzeichnet, dass** die im Rahmen der Zerlegung der identität bestimmte Kennung des Klienten im Rechnernetz authentifiziert wird, vorzugsweise durch wenigstens einen Vergleich seitens einer Datenendeinrichtung des Rechnemetzes.

25. Verfahren nach einem der Ansprüche 1 bis 24, **dadurch gekennzeichnet, dass** dieses zur Autorisierung eines Zugriffs eines Datenendgerätes auf Daten und/oder Dienste einer Datenendeinrichtung in einem Rechnernetz genutzt wird.

26. Kommunikationssystem bestehend aus einem Rechnernetz mit Datenendeinrichtungen und einem zellularen Mobilfunknetz mit darin betrelbbaren mobilen Endgeräten,
**dadurch gekennzeichnet,**
**dass** die Datenendeinrichtungen, die Einrichtungen des Moblifunknetzes und/oder die mobilen Endgeräte zur Ausführung und/oder Nutzung eines Verfahrens nach einem der Ansprüche 1 bis 25 ausgebildet sind.

27. Mobiles Endgerät zur Nutzung In einem zellularen Mobilfunknetz mit einem Mobilfunkteilnehmer-Identifikations-Modul, SIM,
**dadurch gekennzeichnet,**
**dass** dieses zur Ausführung eines Verfahrens nach einem der Ansprüche 1 bis 25 ausgebildet ist, vorzugsweise in einem Kommunikationssystem nach Anspruch 26.

28. Mobilfunkteilnehmer-Identifikations-Modul, SIM, zur Nutzung mit einem mobilen Endgerät zum Betrieb in einem zellularen Mobilfunknetz,
**dadurch gekennzeichnet,**
**dass** dieses zur Ausführung eines Verfahrens nach einem der Ansprüche 1 bis 25 ausgebildet ist, vorzugsweise in einem Kommunikationssystem nach Anspruch 26.

29. Mobilfunktelinehmer-Identifikations-Modul, SIM, nach Anspruch 28, **dadurch gekennzeichnet, dass** das Verfahren als Anwendungsprogramm
seitens des Mobilfunkteilnehmer-Identifikations-Moduls, SIM, gespeichert und/oder ausführbar ist., SIM, gespeichert

## Claims

1. A method for creating an identity of clients in a communication system comprising a computer network and a cellular mobile network,
wherein the identity of a client will be created using at least one time information T_{client} which has been synchronized with a time information T_{network} predetermined by the mobile network,
wherein the time information T_{client} used for creating the identity of the client will be provided by a synchronizer unit provided by a mobile terminal of the client which can be operated in the mobile network and/or by a mobile subscriber identification module SIM used by the mobile terminal,
**characterized in that**
in case of need, the time information T_{client} used for creating the identity of the client will be synchronized with the time information T_{network} predetermined by the mobile network within the scope of exchanging signalizing information between the mobile terminal and the mobile network,

2. A method according to claim 1, **characterized in that** the need will be determined in consideration of at least one information item with regard to the availability of the mobile terminal in the mobile network.

3. A method according to claim 1 or claim 2, **characterized in that** the time information T_{client} used for creating the identity of the client will be synchronized with the time information T_{network} predetermined by the mobile network after a time interval within the scope of exchanging signalizing information between the mobile terminal and the mobile network.

4. A method according to one of the claims 1 through 3, **characterized in that** the time information T_{client} used for creating the identity of the client will be synchronized with the time information T_{network} predetermined by the mobile network at least within the scope of exchanging signalizing information for establishing, holding and/or disconnecting a connection between the mobile terminal and the mobile network.

5. A method according to one of the claims 1 through 4, **characterized in that** the synchronization of the time information T_{client} will be realized using a counting device at least if the mobile terminal is not available in the mobile network.

6. A method according to claim 5, **characterized in that** the counting device is provided by the mobile network, it will be activated if the mobile terminal is not available in the mobile network, and if the mobile terminal is again available in the mobile network, a counter value determined by the counting device will be transmitted to the mobile terminal, which counter value will be used by the mobile terminal for synchronizing the time information T_{client}.

7. A method according to one of the claims 1 through 6, **characterized in that** the identity of the client will be created by combining an identifier of the client in the computer network and an identifier of the client in the mobile network.

8. A method according to claim 7, **characterized in that** the identifier of the client will be created in the computer network with a cryptographic algorithm, preferably by means of a data terminal equipment of the computer network.

9. A method according to claim 7 or claim 8, **characterized in that** the identifier of the client in the computer network will be created by using a base identifier of the client in the computer network and a counting device, wherein the counting device is preferably designed for using a cryptographic algorithm and is most preferably a component of the data terminal equipment.

10. A method according to one of the claims 7 through 9, **characterized in that** the identifier of the client in the mobile network is preferably created with a cryptographic algorithm, preferably by means of a mobile terminal of the client which can be operated in the mobile network.

11. A method according to one of the claims 7 through 10, **characterized in that** the identifier of the client in the mobile network will be created by using a base identifier of the client in the mobile network and a counting device, wherein the counting device is preferably designed for using a cryptographic algorithm and is most preferably a component of the mobile terminal and/or a mobile subscriber identification module SIM used by the mobile terminal.

12. A method according to one of the claims 7 through 11, **characterized in that** the identifiers will be created independently from each other.

13. A method according to one of the claims 7 through 12, **characterized in that** the identifier of the client in the computer network will be ciphered with a key which can be determined on the base of the identifier of the client in the mobile network, preferably a symmetrical key.

14. A method according to one of the claims 7 through 13, **characterized in that** the identifier of the client in the computer network will be ciphered with a key which can be determined on the base of the identifier of the client in the mobile network and the count of a synchronized counting device of the mobile network, preferably a symmetrical key.

15. A method according to one of the claims 1 through 14, **characterized in that** the client is a process and/or a user of a data terminal equipment in the computer network and/or a process and/or a user of a mobile terminal which can be operated in the mobile network.

16. A method according to one of the claims 1 through 15, **characterized in that** the identity is used for the authentication of a client

17. A method according to claim 16, **characterized in that** a data terminal equipment of the computer network will request the Identity from the client via a communication connection of the computer network and the client will transmit it via the communication connection to the data terminal equipment of the computer network.

18. A method according to claim 16 or claim 17, **characterized in that** a data terminal equipment of the computer network will request the identifier of the client in the mobile network from the client via a communication connection of the computer network.

19. A method according to claim 18, **characterized in that** the request for the identifier of the client in the mobile network via a communication connection of the mobile network will be directed to a mobile terminal of the client which can be operated in the mobile network, the identifier of the client in the mobile network will be created by means of the mobile terminal of the client and the created identifier of the client in the mobile network will be transmitted by the mobile terminal of the client to the data terminal equipment of the computer network via and/or by using a communication connection of the mobile network.

20. A method according to claim 19, **characterized in that** the communication connection of the mobile network is a communication connection which enables a connection to the computer network, preferably a communication connection which uses protocols according to the WAP specification.

21. A method according to one of the claims 18 through 20, **characterized in that** the identifier of the client will be created by means of the data terminal equipment and will be ciphered with the identifier of the client in the mobile network for creating the identity of the client.

22. A method according to one of the claims 16 through 21, **characterized in that** the authentication will be realized by means of a data terminal equipment of the computer network.

23. A method according to one of the claims 16 trough 22, **characterized in that** a decomposition of the Identity into the Identifier of the client in the computer network and the identifier of the client in the mobile network will be realized within the scope of the authentication.

24. A method according to one of the claims 16 through 23, **characterized in that** the identifier of the client in the computer network which has been determined within the scope of the decomposition of the identity will be authenticated, preferably by means of at least one comparison by a data terminal equipment of the computer network.

25. A method according to one of the claims 1 through 24, **characterized in that** this one is used for the authentication of an access of a digital terminal to data and/or services of a data terminal equipment in a computer network.

26. A communication system composed of a computer network comprising data terminal equipments and a cellular mobile network comprising mobile terminals which can be operated therein,
**characterized in that**
the data terminal equipments, the devices of the mobile network and/or the mobile terminals are designed for carrying out and/or using a method according to one of the claims 1 through 25.

27. A mobile terminal for the use in a cellular mobile network with a mobile subscriber identification module SIM,
**characterized in that**
this one is designed for carrying out a method according to one of the claims 1 through 25, preferably in a communication system according to claim 26,

28. A mobile subscriber identification module SIM for the use with a mobile terminal to be operated in a cellular mobile network,
**characterized in that**
this one is designed for carrying out a method according to one of the claims 1 through 25, preferably in a communication system according to claim 26.

29. A mobile subscriber identification module SIM according to claim 28, **characterized in that** the method is memorized and/or can be carried out by the mobile subscriber identification module SIM as application program,

## Revendications

1. Procédé de création d'une identité des clients dans un système de communication comprenant un réseau d'ordinateur et un réseau de téléphonie mobile cellulaire,
l'identité d'un client étant créée en utilisant au moins une information de temps T_{client} synchronisée avec une information de temps T_{réseau} prédéterminée par le réseau de téléphonie mobile,
l'information de temps T_{client} utilisée pour créer l'identité du client étant mise à la disposition par un dispositif de synchronisation fourni par un terminal mobile du client qu'on peut opérer dans le réseau de téléphonie mobile et/ou par un module d'identification d'abonné mobile SIM utilisé par le terminal mobile,
**caractérisé en ce qu'**
en cas de besoin, l'information de temps T_{client} utilisée pour créer l'identité du client est synchronisée avec l'information de temps T_{réseau} prédéterminée par le réseau de téléphonie mobile dans le contexte de l'échange des informations de signalisation entre le terminal mobile et le réseau de téléphonie mobile.

2. Procédé selon la revendication 1, **caractérisé en ce que** le besoin est déterminé en considération d'au moins une information par rapport à l'accessibilité du terminal mobile dans le réseau de téléphonie mobile.

3. Procédé selon la revendication 1 ou 2, **caractérisé en ce que** l'information de temps T_{client} utilisée pour créer l'identité du client est synchronisée avec l'information de temps T_{réseau} prédéterminée par le réseau de téléphonie mobile après un intervalle de temps dans le contexte de l'échange des informations de signalisation entre le terminal mobile et le réseau de téléphonie mobile.

4. Procédé selon l'une des revendications 1 à 3, **caractérisé en ce que** l'information de temps T_{client} utilisée pour créer l'identité du client est synchronisée avec l'information de temps T_{réseau} prédéterminée par le réseau de téléphonie mobile au moins dans le contexte de l'échange des informations de signalisation pour établir, maintenir et/ou couper une communication entre le terminal mobile et le réseau de téléphonie mobile.

5. Procédé selon l'une des revendications 1 à 4, **caractérisé en ce que** la synchronisation de l'Information de temps T_{client} se fait au moins en cas de non-accessibilité du terminal mobile dans le réseau de téléphonie mobile en utilisant au moins un compteur.

6. Procédé selon la revendication 5, **caractérisé en ce que** le compteur est prévu par le réseau de téléphonie mobile, il est activé en cas de non-accessibilité du terminal mobile dans le réseau de téléphonie mobile et, quand le terminal mobile est de nouveau accessible dans le réseau de téléphonie mobile, il transmettra une valeur de comptage déterminée par le compteur au terminal mobile, laquelle sera utilisée par le terminal mobile pour synchroniser l'Information de temps T_{client}.

7. Procédé selon l'une des revendications 1 à 6, **caractérisé en ce que** l'identité du client est créée par la combinaison d'un identificateur du client dans le réseau d'ordinateur et d'un identificateur du client dans le réseau de téléphonie mobile.

8. Procédé selon la revendication 7, **caractérisé en ce que** l'identificateur du client dans le réseau d'ordinateur est créé avec un algorithme cryptographique, de préférence par un poste terminal du réseau d'ordinateur.

9. Procédé selon la revendication 7 ou la revendication 8, **caractérisé en ce que** l'identificateur du client dans le réseau d'ordinateur est créé en utilisant un identificateur de base du client dans le réseau d'ordinateur et un compteur, le compteur étant de préférence adapté à utiliser un algorithme cryptographique et étant de préférence particulière une composante du poste terminal.

10. Procédé selon l'une des revendications 7 à 9, **caractérisé en ce que** l'identificateur du client dans le réseau de téléphonie mobile est créé avec un algorithme cryptographique, de préférence par un terminal mobile du client qu'on peut opérer dans le réseau de téléphonie mobile.

11. Procédé selon l'une des revendications 7 à 10, **caractérisé en ce que** l'identificateur du client dans le réseau de téléphonie mobile est créé en utilisant un identificateur de base du client dans le réseau de téléphonie mobile et un compteur, le compteur étant de préférence adapté à utiliser un algorithme cryptographique et étant de préférence particulière une composante du terminal mobile et/ou d'un module d'identification d'abonné mobile SIM utilisé par le terminal mobile.

12. Procédé selon l'une des revendications 7 à 11, **caractérisé en ce que** les identificateurs sont créés de manière indépendante l'un de l'autre.

13. Procédé selon l'une des revendications 7 à 12, **caractérisé en ce que** l'identificateur du client dans le réseau d'ordinateur est codé par un code qu'on peut déterminer à partir de l'identificateur du client dans le réseau de téléphonie mobile, de préférence par un code symétrique.

14. Procédé selon l'une des revendications 7 à 13, **caractérisé en ce que** l'identificateur du client dans le réseau d'ordinateur est codé par un code qu'on peut déterminer à partir de l'identificateur du client dans le réseau de téléphonie mobile et la position du compteur d'un compteur synchronisé du réseau de téléphonie mobile, de préférence par un code symétrique.

15. Procédé selon l'une des revendications 1 à 14, **caractérisé en ce que** le client est un processus et/ou un utilisateur d'un poste terminal dans le réseau d'ordinateur et/ou un processus et/ou un utilisateur d'un terminal mobile qui est opérable dans le réseau de téléphonie mobile.

16. Procédé selon l'une des revendications 1 à 15, **caractérisé en ce qu'**on utilise l'identité pour l'authentification d'un client.

17. Procédé selon la revendication 16, **caractérisé en ce qu'**un poste terminal du réseau d'ordinateur demande l'identité du client via une connexion de communication du réseau d'ordinateur et le client la transmet au poste terminal du réseau d'ordinateur via la connexion de communication.

18. Procédé selon la revendication 16 ou la revendication 17, **caractérisé en ce qu'**un poste terminal du réseau d'ordinateur demande l'identificateur du client dans le réseau de téléphonie mobile du client via une connexion de communication du réseau d'ordinateur.

19. Procédé selon la revendication 18, **caractérisé en ce que** la demande à l'identificateur du client dans le réseau de téléphonie mobile via une connexion de communication du réseau de téléphonie mobile est dirigée à un terminal mobile du client qu'on peut opérer dans le réseau de téléphonie mobile, l'identificateur du client dans le réseau de téléphonie mobile est créé par moyen du terminal mobile du client et l'identificateur créé du client dans le réseau de téléphonie mobile est transmis par le terminal mobile du client au poste terminal du réseau d'ordinateur via et/ou en utilisant une connexion de communication du réseau de téléphonie mobile.

20. Procédé selon la revendication 19, **caractérisé en ce que** la connexion de communication du réseau de téléphonie mobile est une connexion de communication qui permet une connexion au réseau d'ordinateur, de préférence une connexion de communication qui utilise des protocoles selon la spécification WAP.

21. Procédé selon l'une des revendications 18 à 20, **caractérisé en ce que** le poste terminal du réseau d'ordinateur crée l'identificateur du client dans le réseau d'ordinateur et le code avec l'identificateur du client dans le réseau de téléphonie mobile pour créer l'identité du client.

22. Procédé selon l'une des revendications 16 à 21, **caractérisé en ce que** l'authentification est faite par un poste terminal du réseau d'ordinateur.

23. Procédé selon l'une des revendications 16 à 22, **caractérisé en ce que** l'identité est décomposée en l'identificateur du client dans le réseau d'ordinateur et
l'identificateur du client dans le réseau de téléphonie mobile dans le contexte de l'authentification.

24. Procédé selon l'une des revendications 16 à 23, **caractérisé en ce que** l'identificateur du client dans le réseau d'ordinateur qu'on a déterminé dans le contexte de la décomposition de l'identité est authentifié de préférence par moyen d'au moins une comparaison faite par un poste terminal du réseau d'ordinateur.

25. Procédé selon l'une des revendications 1 à 24, **caractérisé en ce que** celui-ci est utilisé pour l'authentification d'un accès d'un poste téléphonique terminal aux données et/ou aux services d'un poste terminal dans un réseau d'ordinateur.

26. Système de communication composé d'un réseau d'ordinateur comprenant des postes terminaux et d'un réseau de téléphonie mobile cellulaire comprenant des terminaux mobiles opérables dans celui-ci,
**caractérisé en ce que**
les postes terminaux, les dispositifs du réseau de téléphonie mobile et/ou les terminaux mobiles sont configurés pour exécuter et/ou utiliser un procédé selon l'une des revendications 1 à 25.

27. Terminal mobile pour l'utilisation dans un réseau de téléphonie mobile cellulaire comprenant un module d'identification d'abonné SIM,
**caractérisé en ce que**
celui-ci est configuré pour exécuter un procédé selon l'une des revendications 1 à 25, de préférence dans un système de communication selon la revendication 26.

28. Module d'identification d'abonné SIM pour l'utilisation avec un terminal mobile qu'on peut opérer dans un réseau de téléphonie mobile cellulaire,
**caractérisé en ce que**
celui-ci est configuré pour exécuter un procédé selon l'une des revendications 1 à 25, de préférence dans un système de communication selon revendication 26.

29. Module d'identification d'abonné SIM selon la revendication 28, **caractérisé en ce que** le procédé est mémorisé et/ou peut être exécuté en tant que programme d'application par le module d'identification d'abonné SIM.
